# EUROPEAN PATENT SPECIFICATION

(11) **EP 3 195 172 B1**
(45) Date of publication and mention of the grant of the patent: **17.12.2025**
(21) Application number: 15839809.9
(22) Date of filing: 14.09.2015
(51) Int. Cl.: H04L 9/40, G06F 21/31

(54) **BLOCKING FORGIVENESS FOR DDOS**
BLOCKIERUNG DER VERGEBUNG VON DDOS
BLOCAGE DE TOLÉRANCE AU DDOS

(30) Priority: 12.09.2014 US 201462050053 P; 12.09.2015 US 201514852519
(43) Date of publication of application: 26.07.2017
(73) Proprietor: Level 3 Communications, LLC, Denver, CO 80202 (US)
(72) Inventor: SMITH, Robert, Broomfield, Colorado 80021 (US); MARCK, Shawn, Seattle, Washington 98101 (US)
(74) Representative: Marks & Clerk LLP
(86) International application number: PCT/US2015/049960
(87) International publication number: WO 2016/040937

(56) References cited:
- WO-A2-03/050644
- US-A1- 2005 060 412
- US-A1- 2013 152 153
- US-A1- 2013 291 107
- US-A1- 2014 150 095
- US-B1- 8 176 553
- US-B1- 8 621 065

## Description

### BACKGROUND

In a network like the Internet, resources (e.g., pages of a website) may be requested by legitimate and malicious systems and persons alike. A DDoS attack is an attempt to make resources of a network unavailable to legitimate users. A DDoS attack often involves multiple computers acting together to prevent a targeted website or service from functioning properly by having the computers repeatedly request network resources of the website or service. This group of multiple computers is often referred to as a bot or botnet. A result of these repeated requests can be that a website or service has difficulty responding to legitimate requests, and thus the website or service is effectively unavailable to legitimate users.

Various responses have been adopted in an attempt to respond to DDoS attacks. One such response is to place those machines that are repeatedly requesting webpages onto to a blacklist, whereby all traffic originating from one these blacklisting machines is discarded, ignored, or otherwise dealt with in a manner so that the website's availability and functionality will be minimally affected.

Problems can occur when there are legitimate users (who website operators want to allow to access websites and services) that are erroneously identified as malicious attackers and are placed on blacklists. It can be difficult to identify these legitimate users and remove them from those blacklists, and to allow quick access to the requested website.

Embodiments of the invention address these and other problems, individually and collectively.
We refer to WO03/050644 A1 (Afek at al; published 19.06.03), which relates to protecting against malicious traffic and discloses method for screening packet-based communication traffic, and discloses that: a determination is made, by analyzing a first data packet, that the first data packet was generated by a worm; and in response to the determination, a second data packet sent over the network from the source address is blocked.

### BRIEF SUMMARY

According to the present invention, a method comprises: receiving, at a mitigation system, a plurality of requests for one or more network resources to which the mitigation system is providing a mitigation service; identifying a first request of the plurality of requests as occurring within a first observation cycle; classifying the first request as a bad request based on one or more properties of the first request; adding a first address associated with the first request to a bad address list of the first observation cycle; obtaining a good address list of the first observation cycle, the good address list defining a list of addresses that are prevented from being added to a block list, wherein the block list defines a list of addresses from which requests are blocked for a specified time; reconciling the good address list of the first observation cycle with the bad address list to determine the block list, wherein the reconciling comprises determining whether one or more duplicate address exists in each of the good address list and the bad address list and removing said one or more duplicate address from the bad list to obtain the block list; adding the first address associated with the first request to the block list; identifying a second request of the plurality of requests as being transmitted from the first address and as occurring within a second observation cycle, the second request occurring within the specified time period; classifying the second request as a good request based on one or more properties of the second request; and removing, based on classifying the second request as a good request, the first address from the block list, thereby allowing a future request from the first address to be transmitted to the one or more network resources, wherein adding a first address associated with the first request to a bad address list is based on one or more other requests in the first observation cycle that are from the first address, wherein the plurality of requests are received as a set of web server log files, wherein each request comprises a network resource, and the requesting address, and wherein the method further comprises: analyzing each request from the set of web server log files and placing each requesting address into the bad address list (250) if the request is not a member of the allowed network resource list and the request is a member of the prohibited network resource list, and otherwise placing the requesting address in a good address list; placing each address in the first bad address list into a block list if the address is not contained in a whitelisted addresses list; sending the block list to a firewall system. incrementing a counter for the first address based on the classification of the first request as a bad request; incrementing the counter for the first address for each additional request of the plurality of requests that is associated with the first address and that is classified as a bad request; comparing the counter to a threshold number; and adding the first address to the bad address list when the counter exceeds the threshold number.
Preferred embodiments are defined by the dependent claims.

### BRIEF DESCRIPTION OF THE DRAWINGS

FIG. 1 shows a method of performing DDoS mitigation.
FIG. 2 shows a representation of a web server log file and a kernel TCP file and the data that can be extracted from them.
FIG. 3 is a data flow diagram illustrating the data flow for analysis of a web server log file to generate a blocked address list.
FIG. 4 is a data flow diagram illustrating the data flow for analysis of a web server log file to generate a blocked address list.
FIGS. 5A-5F is a logic flow diagram for generating lists of good and bad address lists and ultimately, a list of addresses to be blocked by a firewall system.
FIGS. 6A-6G is a logic flow diagram for generating lists of good and bad address lists and ultimately, a list of addresses to be blocked by a firewall system.
FIG. 7 is a flowchart of a method 700 for unblocking a legitimate user according to embodiments of the present invention.
FIG. 8 is a flowchart of a method 800 of operating a mitigation system according to embodiments of the present invention.
FIG. 9 shows a block diagram of an example computer system 10 usable with system and methods according to embodiments of the present invention.

### DETAILED DESCRIPTION

Techniques are provided for blocking forgiveness in a system that mitigates distributed denial of service (DDoS) attacks on a network. A user's network address can be blocked as a result of performing human behavior analysis on network resource request activity from the user's address. The system can block an address temporarily based on user behavior, classifying legitimate human users as a malicious attacker performing a DDOS attack, but subsequent behavioral analysis of network resource requests can identify that the user should not have been blocked. The system can automatically unblock the user's address, and allow further network resource requests. Previously blocked requests can also be unblocked. The number of infractions (e.g., action classified as malicious) can be tracked and compared to a threshold. If the number is less than the threshold, then that address is not blocked, thereby allowing forgiveness of a certain number of infractions.

Other embodiments are directed to systems, portable consumer devices, and computer readable media associated with methods described herein.

A better understanding of the nature and advantages of embodiments of the present invention may be gained with reference to the following detailed description and the accompanying drawings.

### I. DDOS AND HUMAN BEHAVIORAL ANALYSIS (HBA)

HTTP floods and other DDoS attacks on websites are very common and cause serious harm to network and service providers. In order to be effective, DDoS attacks must use bots. And bots leave behind a different pattern of behavior or signature than humans. These signatures can be analyzed to empower better attack detection and enforcement. Example techniques for distinguishing between patterns of bots and humans can be found in commonly owned U.S. Patent Application No. 13/458,129, filed on Apr. 27, 2012, and entitled "System And Method For Mitigating Application Layer Distributed Denial of Service Attacks Using Human Behavior Analysis," the entirety of which is hereby incorporated by reference herein.

As an example of HBA, a human user wants to go to a website. A website located at a particular URL is composed of many components, an html file, several picture files, multiple style sheet files, and perhaps some Java files. A bot might only ask for, one particular file, over and over again so as to overwhelm the website. For example, it could ask for a particular picture file, like chair.jpg. Bots do this because it is easy to program the bot to do this and continuously ask for specific resources like chair.jpg, as opposed to programming the logic to randomly select items on a website; like a human might select. The bot will be asking for a static list of items, or a related list of items in a discernible pattern. HBA analysis is able to differentiate the behavior of a bot from that of a human by the requests made, and by the connection count of the remote host.

Generally, there are two types of data that can be used to differentiate between humans and bots: (1) data that is obtained and (2) data that is observed. This data emerges over time to provide the context needed to create a fingerprint (unique pattern) for bots and humans alike. Good enforcement benefits from actionable intelligence. The actionable intelligence can be gathered by generating good and bad IP address lists in real time, where whitelisted addresses get added to the good list and blacklisted addresses (i.e. known botnets) get added bad list.

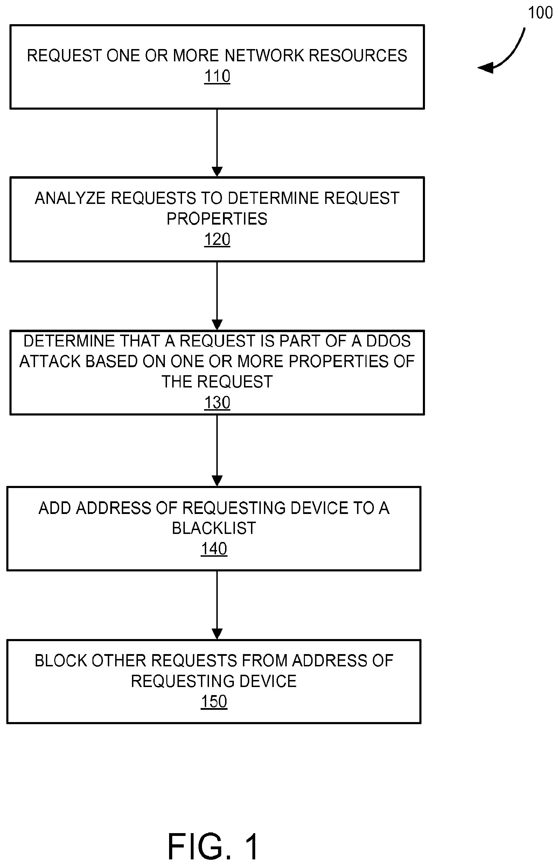

FIG. 1 shows a method of performing DDoS mitigation according to embodiments of the present invention.

In step 110, a set of requests are received for one or more network resources. The requests may be all received in a single observation cycle, as is discussed below. Requests that are part of a same page load can be identified. Such requests of a page load can occur across observation cycles.

In step 120, each of the requests are analyzed to determine properties of the requests. The analysis of a request includes determining a network resource being requested. Other examples of a property of the request are the user agent string of a browser that one or more requests came from.

In step 130, a first request is identified as being a part of a DDoS attack based on one or more properties of the request. For example, a request for a particular resource may be typical of a DDoS attack, and thus a request for that resource would cause the first request to be labeled as part of the DDoS attack.

In step 140, the address of the requesting device of the first request is added to a black (bad) address list. In one embodiment, the bad address list can be determined fresh for each observation cycle. Even in such an embodiment, some bad addresses can be permanently identified, and may be stored in connection with a firewall.

In step 150, other requests from the requesting device are blocked. The other requests may be in a same observation cycle or may be in later observations cycles. A similar process can be performed for good requests. For example, if the one or more properties of a request indicate the request is from a person, and not a bot. The address of the person can be added to good address list, and the request can be transmitted to the one or more network resources. Then, other requests from that good address can also be sent.

Because of their programmed logic, bots make requests which form an identifiable pattern. They continuously request a set of resources endlessly. Therefore, bots do not end up on the good address list, only legitimate, human users can. However, legitimate users end up on the bad address list on occasion. It is important to reconcile these false positives on the bad list, so a business's legitimate users can access their website.

### II. OBSERVATION CYCLES

Web server log files contain information regarding attempted access of a network resource. The requests of a log file can be for a same page load of a website. Thus, a page load can be composed of multiple requests. This information in a log file (i.e., for each request) can include, but is not limited to, the remote address attempting to access a network resource, the time of attempted access, the request made, and the user agent string of a web browser from which a request was made.

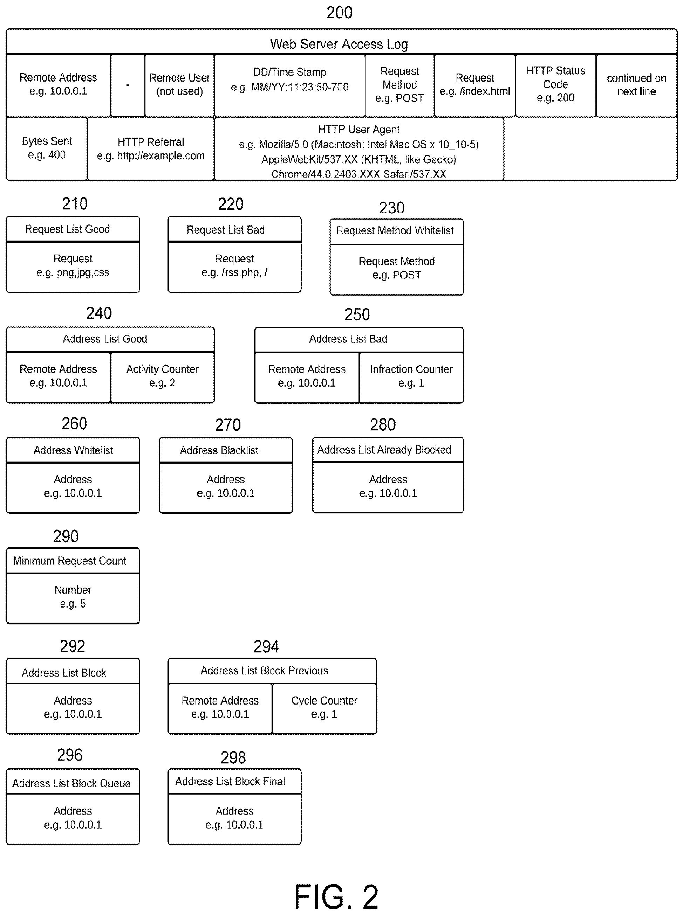

FIG. 2 shows an example of entry of a log file type. Web Server Access Log File 200 shows example entries from a web server log file, for example an Apache or Nginx web server.

In an embodiment, web server logs are queried and analyzed over a set period of time that comprises an observation cycle. An example length for an observation cycle is between 1-5 seconds.

During each observation cycle, the logs are analyzed for malicious behavior. For example, the logs could be analyzed to find behaviors that are indicative of requests that would be considered a bad request that a bot might make. If such a behavior is determined, the address of the requesting computer or computers could end up being placed on the bad address list, and those addresses could be placed on the block list and blocked for a period longer than the observation cycle, e.g., a duration of one or more minutes.

Likewise, if requests coming from an address are deemed to not be of a malicious nature, for example that they are indicative of human behavior, the address can be placed on the good address list and removed from the block list if on the block list. A result of each observation cycle is that each remote address that attempted to access a network resource during that observation cycle is placed on a good address list or a bad address list. Those lists are reconciled to create a block list.

The reconciling can include identifying any addresses that are both on the good address list and the bad address list. These addresses can be removed from the bad address list based on the assumption that a legitimate user should not end up on the bad address list.

The addresses on the block list have their requests denied for a set period of time. The set period of time may be for a unit of time; typically measured in seconds.

**In** some embodiments, the good address list and bad address list can be transient, in that they only last for the current observation cycle. Thus, for every observation cycle, each address read in the web server log can be revalidated. The block list can be persistent. For example, only when a timer for a blocked address expires is the address purged from the block list.

### III. DATA ACROSS OBSERVATION CYCLES

Typically, enforcement rules to mitigate DDoS attacks are based on static intelligence. DDoS enforcement that leverages dynamic real time intelligence is not done, because it is normally just done in the data plane. And static intelligence limits the efficacy of enforcement. There is no DDoS enforcement that leverages dynamic, real-time intelligence on DDoS attacks, because enforcement is typically done in the data plane - not the control plane. In a data plane, that is just a hard set rule of identifying a malicious request, and placing the corresponding address on a blacklist.

A problem can arise when a legitimate user selects an item of a website that is on a bad target list, e.g., an item that has been designated as being associated with a DDoS attack pattern. And, the request by the user might occur at the end of an observation cycle, so that the other requests that the user makes are not seen during that observation cycle. In such a situation, the legitimate user might be blocked since the current observation cycle only sees the one request for the bad target, or at least sees only other requests for other bad targets.

This increases the number of legitimate users who can't access websites with DDoS protection because they temporarily cross the threshold for behavior associated with bots. Some legitimate users can be blocked without any ability to check for and reconcile the issue. These false positives hurt customers' business, while making their website more vulnerable to new types of DDoS attacks created every day.

Any removal from a blacklist could be done manually, if at all. But, often it would not be possible to manually determine a valid page request that spanned multiple cycles, because if an administrator were to look at it, they would not know how to determine just by looking at the source addresses, who is supposed to be getting blocked. However, if an address was blocked unintentionally, and the address could be identified as valid, an administrator could go and unblock them, by removing the address from a blacklist manually. This process would often be initiated by user complaints about being blocked.

### A. Blocking Forgiveness

Blocking forgiveness is a timing issue. If a user is making requests that would be considered malicious, like a bad request that a bot might make, the user's address could end up in the bad list and the user could end up getting blocked during an observation cycle.

An exemplary observation cycle could last for ten seconds. It could happen that a user decided to make a request for a page at the, at the ninth, or ninth and a half second of the cycle. A webpage is composed of many items though, not just a static html page. Therefore, a response can be received by the user, but the user's computer only has half a second to reply. Typically the computer is not be able to respond that fast, and the user's address could end up in the block list since other request that might indicate the address is for a legitimate user are not received in the current observation cycle. Thus, other items requested will not be received, since those requests for the current observation cycle or a next observation cycle can be blocked, since the address is identified has a bad address.

In embodiments, the system can store request data from previous cycles. Thus, the system can remember and compare requests from different cycles. The user's computer could come back and repeat the request for all the items not received after the user's address has been blocked. The system can, on the next cycle look at all the previous items requested as well as the current items requested, and reconcile. The system can look at both sets of items from both cycles, allow the request, and add the user's address to the good list. The system would then delete the user's address from the blacklist.

Another related example of where a legitimate user's address may be placed on the block list is if their behavior is indicative of that of a bot. One scenario in which that might occur is if a user makes a request for a webpage that spans across multiple observation cycles. A webpage consists of many items, including, but not limited to, an html file, several style sheets, and multiple image files. A page load request is composed of many smaller requests for each of these items. A known behavior may be for a bot to request one of those items (e.g., one of the image files). The page load request may only be able to request that image file before an observation cycle ends, and the rest of the items are requested in the subsequent cycle. In such a case, the user might be flagged as a bot and their address placed on the bad address list. The statistical analysis of the web server log file would determine the request to be malicious, and the user's address placed on the bad address list.

During one or more subsequent observation cycles, the rest of the items from the page load request would be requested, and the user's activities would be categorized as non-malicious. Thus, the user might not get categorized as being good until the end of the next observation cycle, and at least a portion of the previous requests would be blocked. Thus, this can lead to the user's address being blocked for at least part of an observation cycle.

In some embodiments, the additional data items requested in the subsequent cycle can lead to a recategorization of the user's address to the good address list. And, in one implementation, the identification that the user is good can be applied to retroactively to a request from a previous cycle, thereby providing forgiveness to that request.

Accordingly, embodiments can store the data from a prior cycle, and thus the complete request for the webpage of this example can be fulfilled as no items requested will be forgotten. If a user's address is placed on a blacklist in one observation cycle, the address may be removed from the blacklist and placed on a good address list in a subsequent cycle if the user's requests are indicative of human, non-bot behavior. On a next observation cycle the HBA can notice that a particular source address was also trying to make some good requests too, and then that can cause the address to be removed from a blacklist and placed on a good address list.

Over multiple observation cycles, the system can tell a legitimate user from a bot, by analyzing requests. In the scenario where a legitimate user has erroneously been placed on a blacklist after one cycle due to a request spanning multiple observation cycles, if all the data from a request is analyzed, the system can correct the misclassifications.

In a control plane further analysis can be done over multiple cycles and thus allow forgiveness. The control plane is able to take in more data in order to then make a further classification.

Embodiments of blocking forgiveness as part of HBA can enable higher confidence for determining humans from bots. Embodiments can save time reconciling false positives by automating the process. And embodiment can allow businesses to better protect their website from DDoS without having to sacrifice user experience (i.e. legitimate users being denied access to their website).

### B. Method of Blocking Forgiveness across Cycles

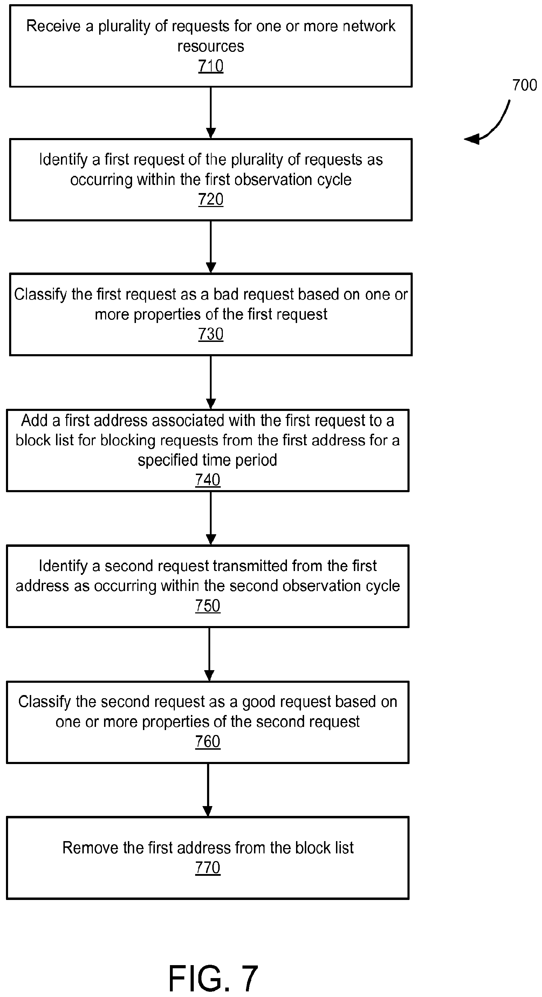

FIG. 7 is a flowchart of a method 700 for unblocking a legitimate user according to embodiments of the present invention. Method 700 may be performed by a mitigation system, e.g., that is designed to handle DDoS attacks.

At block 710, a mitigation system receives a plurality of requests for one or more network resources to which the mitigation system is providing a mitigation service. The plurality of requests can be received in log files, which may include data about properties of the requests. For example, a client computer on a different network can send a request for the one or more network resources. The mitigation system can be part of a same network as the network resources or on a different network.

At block 720, a first request of the plurality of requests is identified as occurring within the first observation cycle. A time stamp corresponding to the requests can be used.

At block 730, the first request is classified as a bad request based on one or more properties of the first request. The classification can be based on various criteria, e.g., as described herein and in U.S. Patent Application No. 13/458,129.

At block 740, a first address associated with the first request is added to a block list for blocking requests from the first address for a specified time period. As part of determining whether to add the first address to the block list, the first address can be added to a bad address list based on the first request. The bad address list can be specific to the first observation cycle. Then, a good address list (e.g., of the first cycle) and the bad address list can be reconciled, and the first address can be added to the block list if the first address is also not on the good address list.

The first request and first address can be stored in memory of the mitigation system. Other data associated with the first request and/or the first address can also be stored. This data can be accessed in one or more later cycles.

At block 750, a second request transmitted from the first address is identified as occurring within the second observation cycle. The second request can be for the one or more network resources and be with the specified time period. The specified time period can be a cycle, or longer or shorter than a cycle.

At block 760, the second request is classified as a good request based on one or more properties of the second request. The classification can be based on various criteria, e.g., based on requesting a target on a good list.

At block 770, the first address is removed from the block list. Thus, a future request from the first address can be transmitted to the one or more network resources. For example, a third request from the first address can be received in the second observation cycle, after the second request. Since the first address has been removed, the third request can be sent to the one or more network resources. Thus, the first address can also be removed from a bad address list for the rest of the second cycle.

In the example, the second request can be blocked, while the request would not be blocked. Thus, the second request might not be sent to the requested network resource, e.g., to a web server hosting a website, but the third request and possibly others are sent. Thus, the second request can act to forgive the first address since the second request is good.

### C. Example

Embodiments of blocking forgiveness can automate the reconciliation of false positives and increases a reliability in determining humans from bots. Before the rules (e.g. block list) can be generated, a baseline for normal human traffic for each website can established by gathering data when the site is not under attack. This enables a custom threshold for bad behavior to be set.

Reasons for false positives can be identified for each website. For example, a legitimate user (not part of a botnet) could be denied because of incomplete data due to the timing cycle of each HBA scan. An example of such a use case follows.

Imagine a common attack on /index.html... There's a whole host of things that have to be downloaded on the index page, like images, java script, etc. If you're only asking for the index page and nothing else, then you're a bot. In this case, it's the absence of certain requests a human would make that gives bots away.

Now, if we have an observation time of 10 seconds and a legitimate user's request for the index page comes in at 9.9 seconds - that last tenth of a second on the cycle - it's received and logged. But, the server hasn't replied with the index page the computer can come back and re-download all those items. This is a bad request target, meaning the legitimate user looks like a bot.

Because this particular request came in at the end of the observation cycle, it resulted in a legitimate user being flagged for making a bad target request. It's an incomplete picture of what's actually being requested by the user.

The user actually needed to make that request again to in order to make good requests, which would negate the possibility of the user being a bot. So, we'll save bad request and go to the next cycle and realize the user actually asked for good request targets ask well. And then embodiments can unblock the user's address (e.g., for future requests).

In various embodiments, there are two approaches to blocking forgiveness to generate more accurate block lists (the last steps in the logic flow document): (1) reconciling duplicates on the block list and good list and (2) using an infraction counter.

Reconciling duplicates on the bad list and good list removes false positives because embodiments can treat it as impossible for bots to end up on the good list Therefore, subtracting addresses that appear on both lists from the bad list prevents legitimate uses from ending up on the block list sent to the firewall.

In addition or instead, another step can be to check if the remaining users on the block list are within the infraction threshold. To do that an infraction counter counts the number of bad requests in relation to the threshold for bad behavior for each website, which is based on a baseline of normal human traffic. If the infraction count is less than the minimum request count, then the user is removed from the bad address list. The principle here is that a little bad behavior is okay, but passed that threshold we have confident the user is a bot. Therefore, the remaining addresses that have exceeded the infraction threshold on the bad list are bots and remain on the block list.

These two blocking forgiveness techniques create a forgiveness list of false positives, once removed from the bad request list, produced more accurate block list that is sent to the firewall.

Blocking forgiveness can generate enforcement rules based on dynamic, real-time intelligence created by HBA. The output of HBA (i.e. the block list) can be used to actively create an IP table rule set in the control plane as a means of enforcement, on each cycle or request. This means HBA can dynamically and actively detects DDoS, create rules in real-time to mitigate the attack, and enforces those rules in such a way that preserve a websites user experience.

In another use case, someone loads a website protected by HBA. Then, that person writes a script to load a few images on the site a hundred times over the next ten seconds. As soon as that person launches that script, HBA can analyze the behavior and ban that user on the next cycle. Even as a human visiting the site, that person running the script will not able to load that website because he/she participated in robotic requests. However, once the person stops running the script, they are banned until the block timer expires. The person participating in robotic requests was caught and banned because of targeted real-time analysis.

### IV. TRAFFIC ANALYSIS

The system can also, perform statistical traffic. This analysis involves having a baseline for normal human traffic, and using the observed traffic to classify a user request as a good or bad behavior. Network logs are read in and the data analyzed to gather statistics about what a normal request pattern might look like from a normal user as opposed to the traffic pattern from a bot or DDoS, right. This initial data would give the system a baseline to compare future requests to.

The system might have a custom threshold for number of allowed requests; that custom threshold might be a request for a particular item that the system has seen before and might it also be for certain behavior in that observation pattern. In a particular cycle, it might be allowing more than one request, for a single item within that observation cycle for some items, and only one access per cycle for other. It could also be that the rule that the system can classify an address as a valid, human as long as the address requested certain key items, two or three specific things in an observation cycle.

The analysis can read the various log files to look at all requests. Each particular request would be compared to the statistical, expected characteristics. This involves a standard deviation calculation being run against that data set of requests for a cycle to see which source address is asking for more resources than the expected, and by how much. Which addresses fall into the normal, expected range? Low numbers are not particularly interesting, but those addresses that have a high standard deviation from the normal request pattern are indicative of an attacker. The high side attacking outliners in the deviation analysis are going to be the ones that are to be examined further. When there are a lot of requests falling outside of the normal, expected distribution curve, then there is a likelihood of DDoS attack.

### V. INFRACTION COUNTING

An analysis that examines each request made by an address is included in a blocking forgiveness system. The analysis starts off with a list of good request addresses, and a list of bad request addresses, which have already been determined. Every address that has been found to make a bad request is going to go into the bad address list, and likewise every machine that has been found to make a good request is going to be in the good address list.

An infraction counter can be kept for each of the addresses in each list, the counter keeping track of the good and bad request made by each address. Every time the system sees a request coming from a bad IP address and that address is already on the list, the counter increments this infraction counter by one.

Towards the end of a cycle when the system is reconciling the bad address list, it can go through it and determine first, if each bad address is also in the good list or not. If it is, then the system can remove the address from the bad address list. Such reconciliation may or may not be done, and instead just infraction counting may be used.

For infraction counting, the system can have a set level of acceptable infractions, and if the infraction count for a particular address is less than the acceptable level for an observation cycle, then the address can be removed from the bad list, and placed on the good list. The address might have made some bad requests, but not at the level of what a bot would be.

This process is run each cycle, with the infraction counters reset after each cycle. Additionally, the good and bad lists are transient, and are cleared after each cycle, meaning an address has to be revalidated from cycle to cycle.

For example, if a user made only 2 bad requests during an observation cycle, and the allowed level of infractions is 5, then that user would be on the good list for that cycle. However, on the next observation cycle the machine at that same address made 20 bad requests. The address would be placed on the bad address list for that behavior. So every cycle addresses can be revalidated.

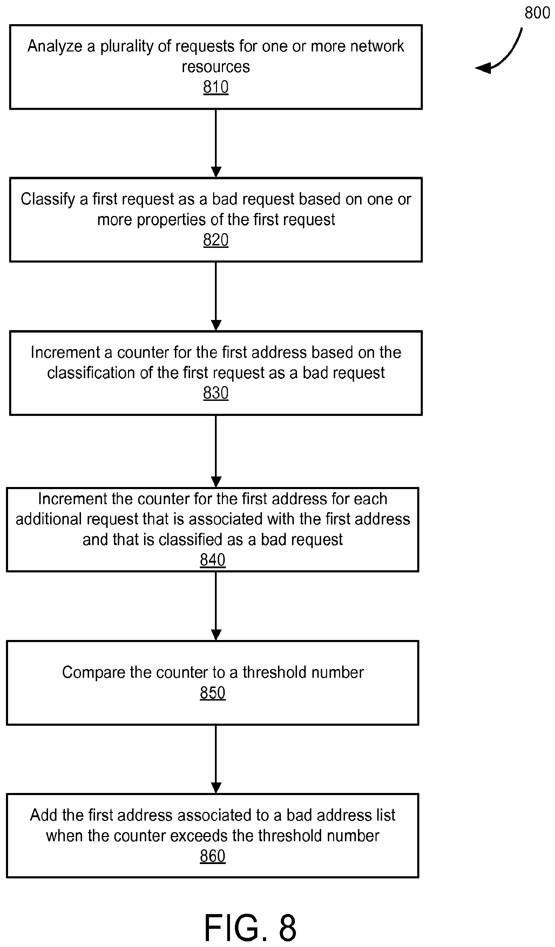

FIG. 8 is a flowchart of a method 800 of operating a mitigation system according to embodiments of the present invention.

At block 810, a mitigation system analyzes a plurality of requests for one or more network resources corresponding to a network to which the mitigation system is providing a mitigation service. The analysis can be of log files and determine one or more properties of each request.

At block 820, a first request is classified as a bad request based on one or more properties of the first request. The first request occurs in a first observation cycle and associated with a first address.

At block 830, a counter is incremented for the first address based on the classification of the first request as a bad request. A counter can be associated with each address detected during an observation cycle.

At block 840, the counter for the first address can be incremented for each request of the plurality of requests that is associated with the first address and that is classified as a bad request. There may not be any other requests classified as bad for the first address, but there could be. If there are, the counter can be incremented to reflect a number of infractions for a given cycle.

At block 850, the counter is compared to a threshold number. The threshold number can be selected based on a history of attacks for the given network and/or for other networks.

At block 860, the first address is added to a bad address list when the counter exceeds the threshold number. Since the first address has made many infractions, the system can identify the first address as being part of an attack and block that address.

### VI. DATA FLOW

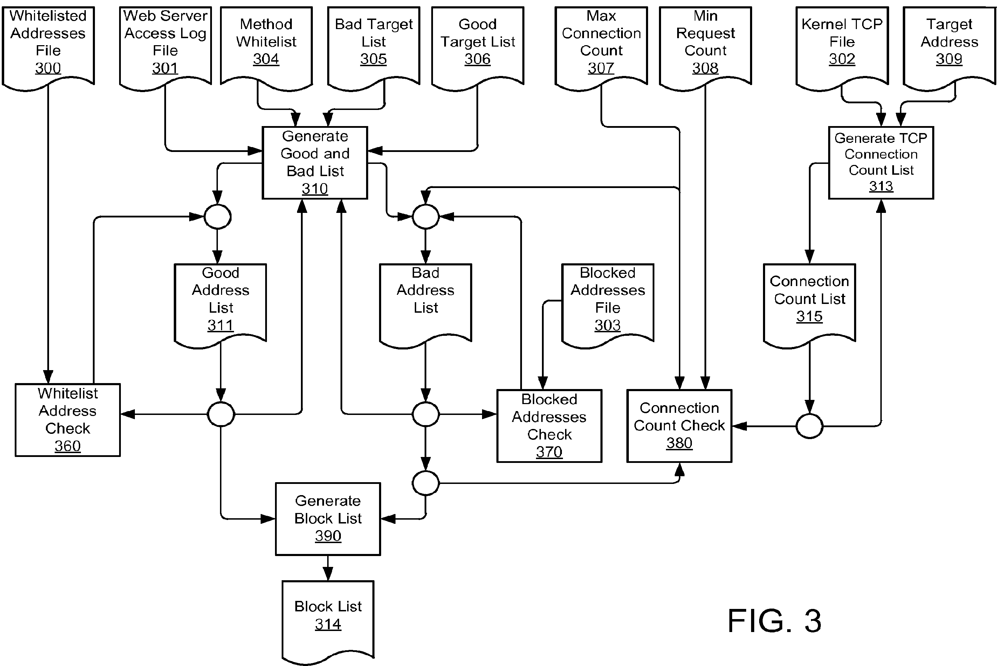

FIG. 3 is an example data flow diagram describing the inputs and flow for generating the good address list, bad address list, and the block list according to embodiments of the present invention. The following are the inputs and outputs shown in the diagram.

Whitelisted Addresses File 300 contains a list of known good addresses that have been previously validated. Web Server Access Log File 301 is a web server log file containing entries of what addresses are requesting what network resources. Kernel TCP File 302 is a log file containing all TCP connections, including what address is connected and for long. Blocked Address File 303 contains a list of known bad addresses, that are already blocked by for example a firewall system. Method Whitelist 304 contains a list of HTTP methods that are used by legitimate monitoring software, the use of which that should not be flagged as malicious. Bad Target List 305 contains a list of malicious addresses determined by statistical analysis. Good Target List 306 contains a list of good addresses determined by statistical analysis. Max Connection Count 307 is a maximum number of concurrent connections allowed for a particular address. Min Request Count 308 is a minimum request count per connection allowed. Target Address 309 is the address to count connections for.

Exploring some of these items in further details, Method Whitelist 304 corresponds to a request list that contains the allowed methods used by approved monitoring software. In some implementations, some methods may require whitelisting, e.g., when customers overload HTTP or use custom methods. When people are running monitoring software for monitoring bots, they were make the same types of requests as bots, and can be unintentionally placed on the blacklist like a bot would be. However their request method are not the same as those of bots. So the system contains a method white list to allow those particular request. Methods that might otherwise be put on the block list would be bypassed or ignored. These methods have to do with the HTTP protocol, and are particular methods like, GET, PUT, or HEAD that are allowed. That way the system does not just arbitrarily block every request type.

Whitelisted Addresses File 300, is a list of particular address that will always be valid, and never have requests blocked. Often a user of the system will establish this list, and even if the addresses are making a series bad requests, and them system would normally have identified them as a blocked, requests will still not be blocked. So through every cycle, after the good address list and bad address list are generated, Whitelist Address Check 360 will go through and ensure that everything entry in the Whitelisted Address File 300 is also in the good address list.

In Generate TCP Connection Count List 313, Kernel TCP File 302 is analyzed for all connections to addresses listed in Target Addresses 309 to create Connection Count List 315. This is list is fed into Connection Count Check 380, which uses checks if the connection counts are within limits.

In Blocked Addresses Check 370, a list of already blocked addresses is read from Blocked Addresses File 303. This is list is fed into the Bad Addresses list, where the addresses are removed. For performance reasons, it does not make sense to re-block already blocked addresses, rather than just removing them from the block. It can slow the system down more to re-block. Instead of revalidating, the system just automatically removes these addresses from further consideration for this cycle. If you tell a server firewall to block the addresses that are already blocked, you can get feedback and delays, so better performance is achieved by removing addresses that are already blocked rather than trying to re-block them.

Blocked Addresses File 303 is obtained from the firewall every observation cycle. This is in order to make sure that the most up to date blocked list is being used. An address could have been added or removed from the blocked list of the firewall just before each cycle.

In Generate Block List 390, reconciliation is performed. Good Address List 311 and Bad Address List 312 were generated in step 310 Generate Good and Bad List, and those lists are compared so that any addresses in Good Address List 311 that are also in Bad Address List 312 are removed from Bad Address List 312 to create Block List 314.

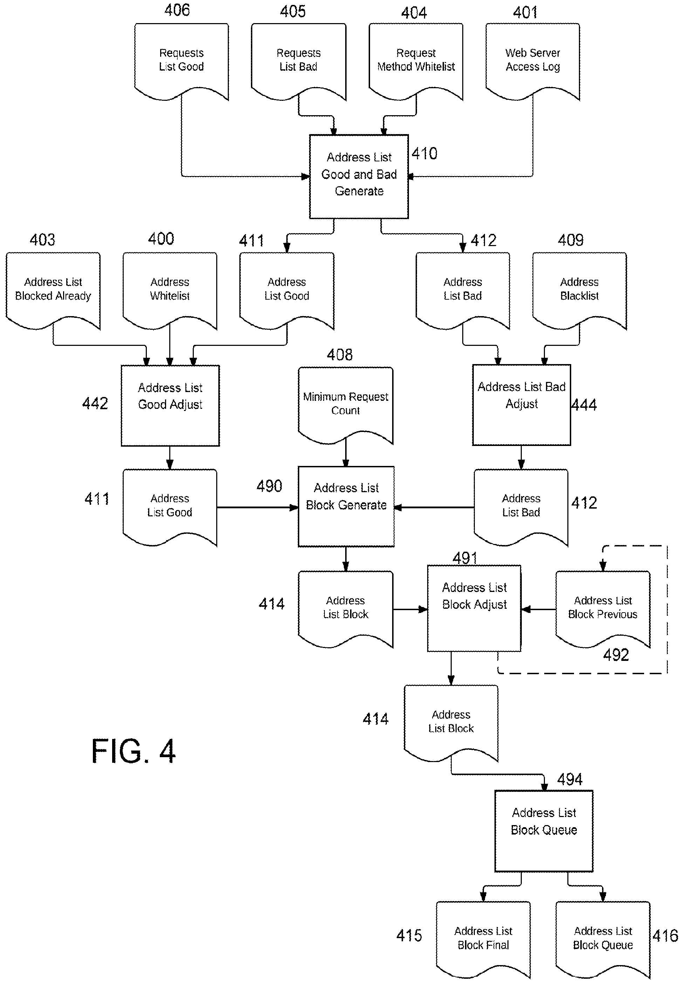

FIG. 4 is another example data flow diagram describing the inputs and flow for generating the good address list, bad address list, and the block list according to embodiments of the present invention. The following are the inputs and outputs shown in the diagram.

In FIG. 4, Address Whitelist 400, Web Server Access Log 401, Address List Blocked Already 403, Request Method Whitelist 404, Requests Bad List 405, Requests Good List 406, Minimum Request Count 408, Address List Good 411, Address List Bad 412, and Address List Block 414 are as described above with respect to FIG. 3 and its corresponding numbering scheme. FIG. 4 further includes Address Blacklist 409, Address List Block Final 415, Address List Block Queue 416, and Address List Block Previous 492.

Furthermore, Address List Good 411 and Address List Bad 412 were generated in step Address List Good and Bad Generate 410. In Address List Good Adjust 442, Address List Good 411 is adjusted in accordance with Address List Blocked Already 403 and Address Whitelist 400. In Address List Bad Adjust 444, Address List Bad 412 is adjusted in accordance with Address Blacklist 409. In Address List Block Generate 490, reconciliation is performed in accordance with Minimum Request Count 408. In Address List Block Adjust 491, Address List Block 414 is adjusted in accordance with Address List Block Previous 492. In Address List Block Queue 494, Address List Block Final 415 and Address List Block Queue 416 are generated.

### VII. LOGIC FLOW

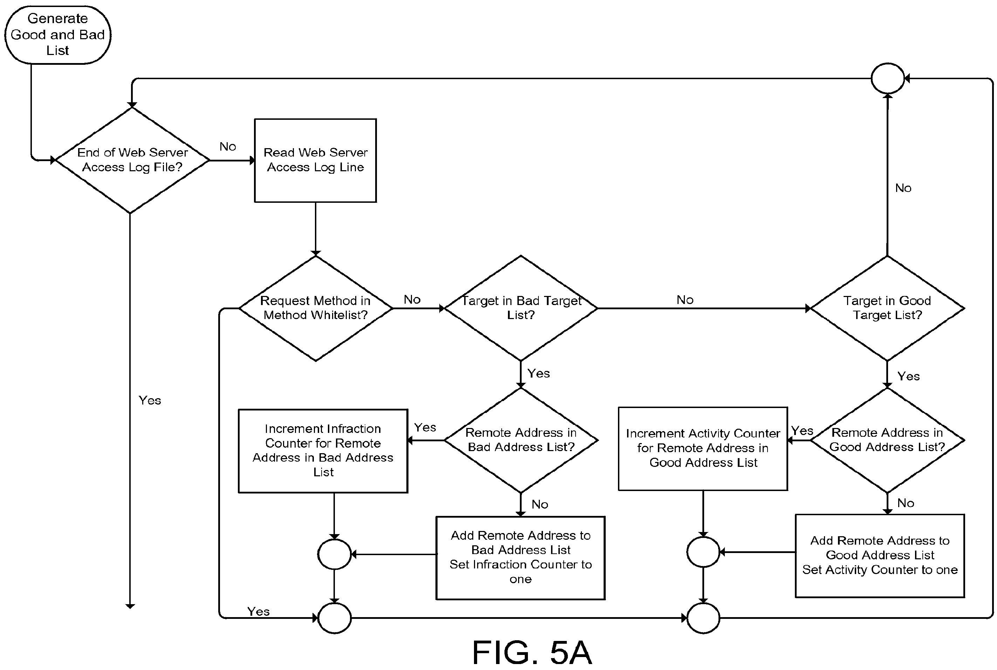

FIG. 5A-5F is a logic flow diagram describing the process for generating a list of addresses to send to a firewall system to block from accessing network resources according to embodiments of the present invention.

FIG. 5A is a diagram showing the beginning of the generation of good and bad address lists. A web server access log file is read line by line. In step 401, if the request method is in a whitelist, then the next line in the file is read. Methods in the whitelist are often those used by monitoring software. If the target address of the request is in the bad target list, then the remote address is placed in the bad address list with an infraction count of 1 if not already there, and if there, then the infraction count is incremented. If the target address is not in the bad target list, and it is in the good target list, then the remote address is placed in the good address list with an activity count of 1 if not already there, and if there, then the activity count is incremented.

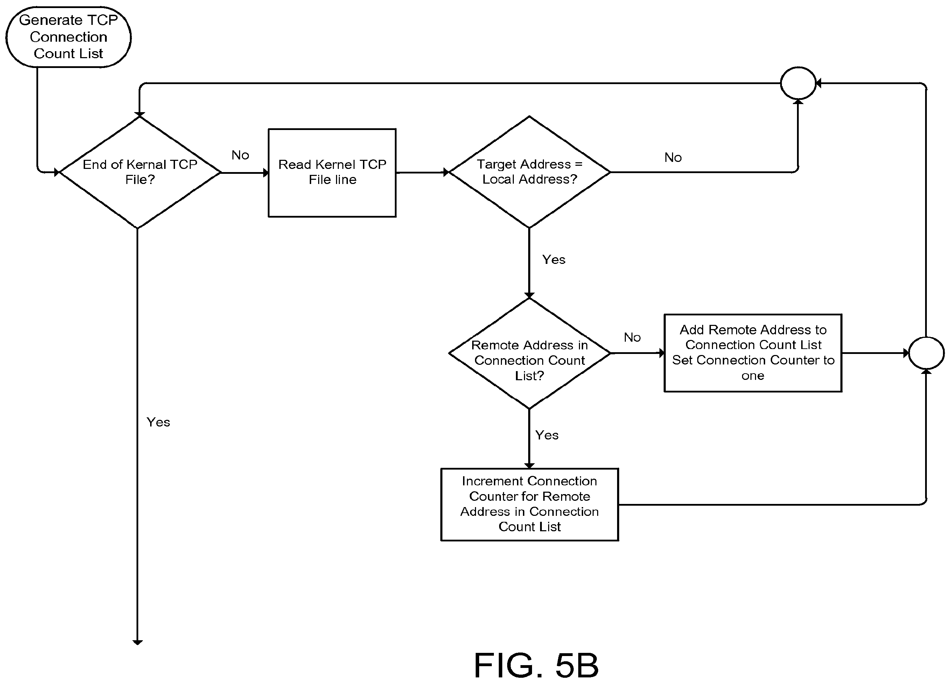

FIG. 5B is diagram showing the creation of a TCP connection count list. Once done reading the web server access log file, the kernel TCP file is read. A TCP connection log file is read line by line extracting addresses. For each address extracted, if it is a target address, then the address is placed in the connection list with a connection count of 1 if not already there, and if there, then the connection count is incremented.

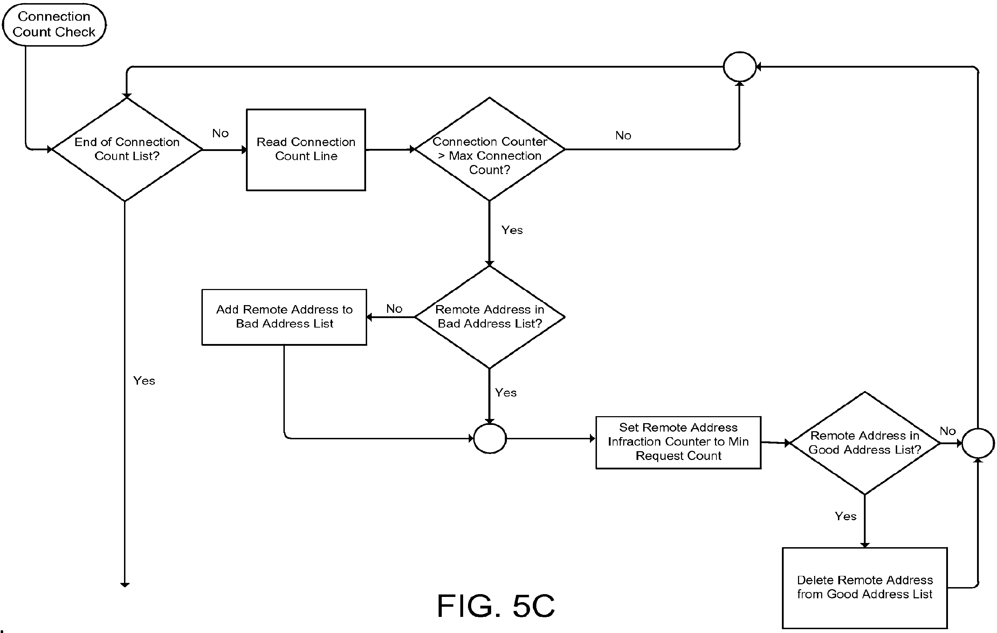

FIG. 5C is a diagram showing the implementation of a connection count check. Once done reading the TCP connection log file, generated list is analyzed for addresses that have exceeded the allowed connection count. If an address has exceeded is the Max Connection Count, then it is placed in the Bad Address List, if not already in the Bad Address List, and if the address is in Good Address List, then it is deleted from the Good Address List, and the Remote Address Infraction Counter is set to the Min Request Count.

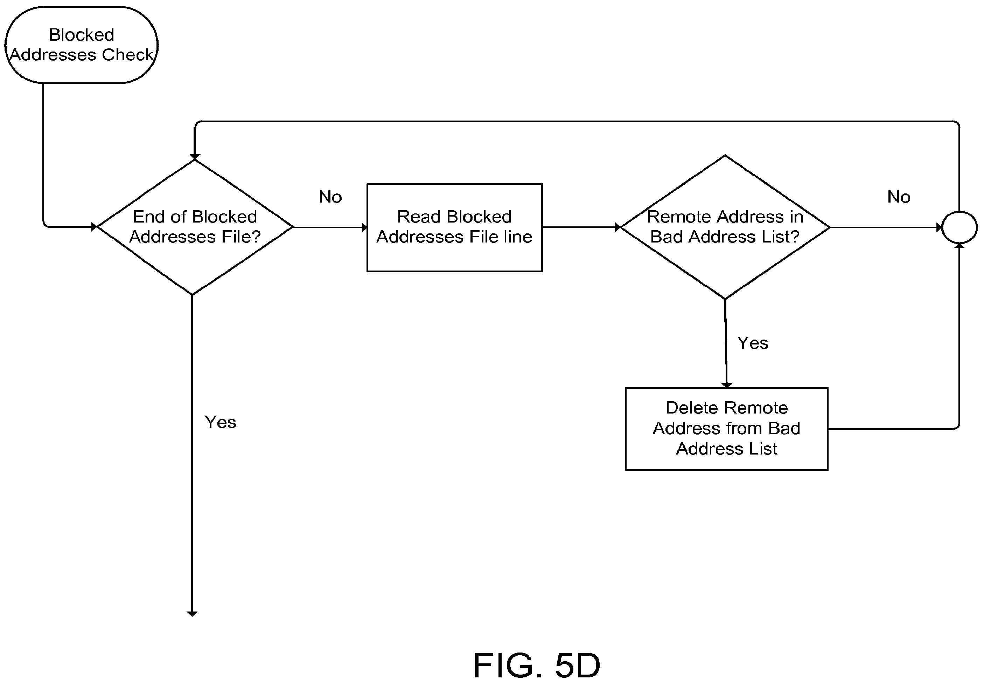

FIG. 5D is a diagram showing the implementation of a blocked address check. The Blocked Address Check reads the Blocked Address File line by line. For each address in the Blocked Address File, if it is in the Bad Address List, then remove it from the Bad Address List.

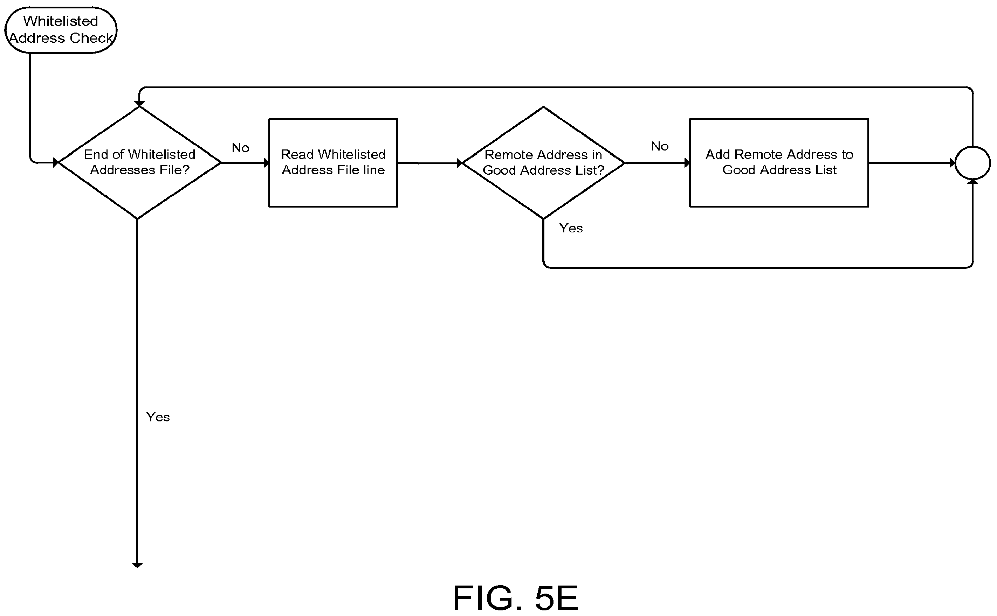

FIG. 5E is a diagram showing the implementation of a whitelist address check. The Whitelisted Address Check reads the Whitelisted Addresses File line by line. For each address in the Whitelisted Address File, if it is in the Bad Address List, then remove it from the Bad Address List.

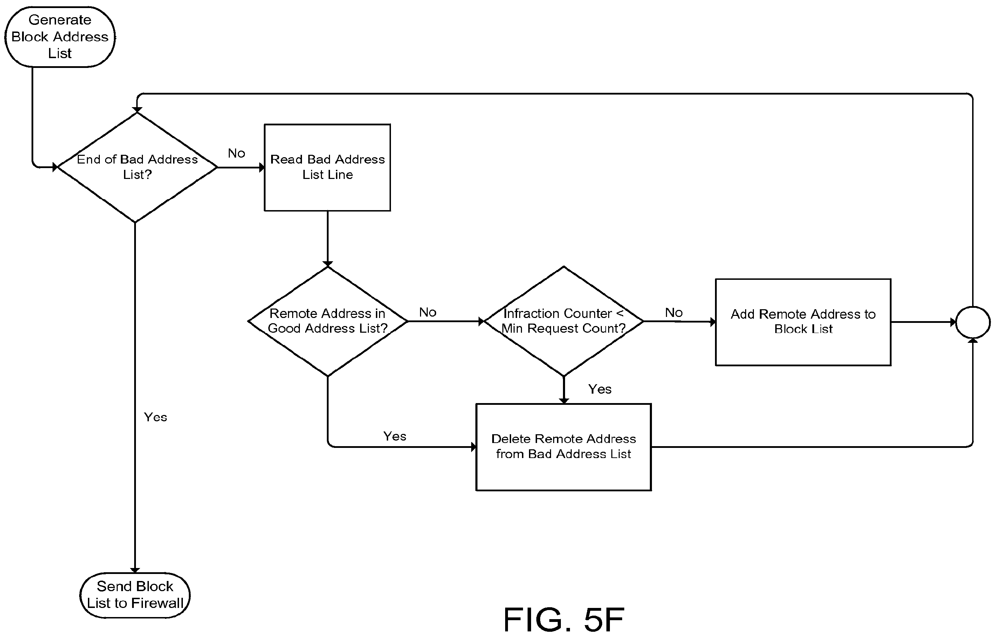

FIG. 5F is a diagram showing the generation of a block list, and the sending of the block list to a firewall. The Bad Address List is analyzed, and if the address is in the Good Address List, then remove the address from the Bad Address List, otherwise if the Infraction Counter is less than the Minimum Request count, then remove the address from the Bad Address List. When all entries in the Bad Address List have been checked, send the Bad Address List to the Firewall system.

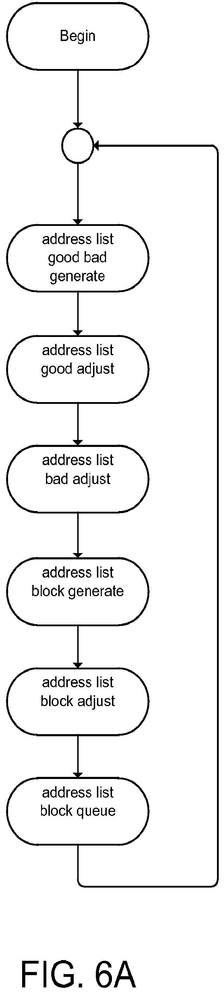

FIG. 6A-6G is a logic flow diagram describing the process for generating a list of addresses to send to a firewall system to block from accessing network resources according to embodiments of the present invention.

FIG. 6A is a diagram showing a high-level flow of the process for generating a list of addresses to send to a firewall system to block from accessing network resources according to embodiments of the present invention.

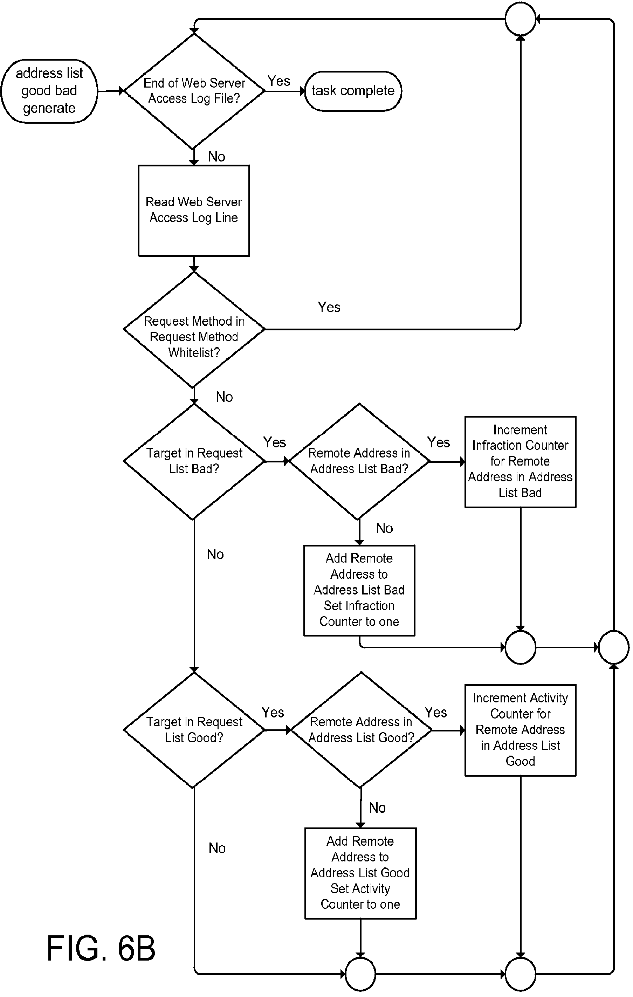

FIG. 6B is a diagram showing the steps for generating the Address List Good and Address List Bad in accordance with embodiments described herein.

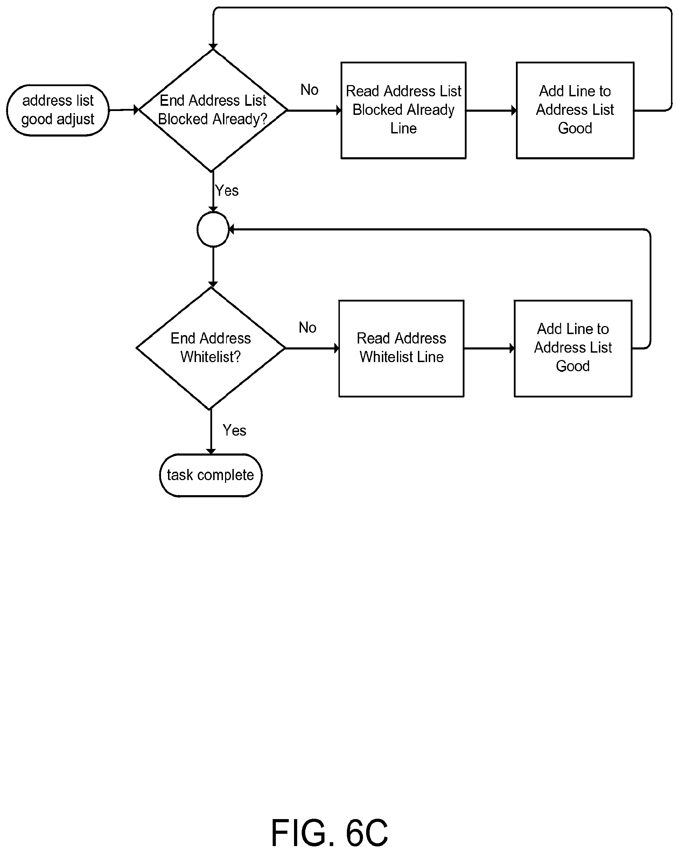

FIG. 6C is a diagram showing the steps for adjusting the Address List Good in accordance with embodiments described herein.

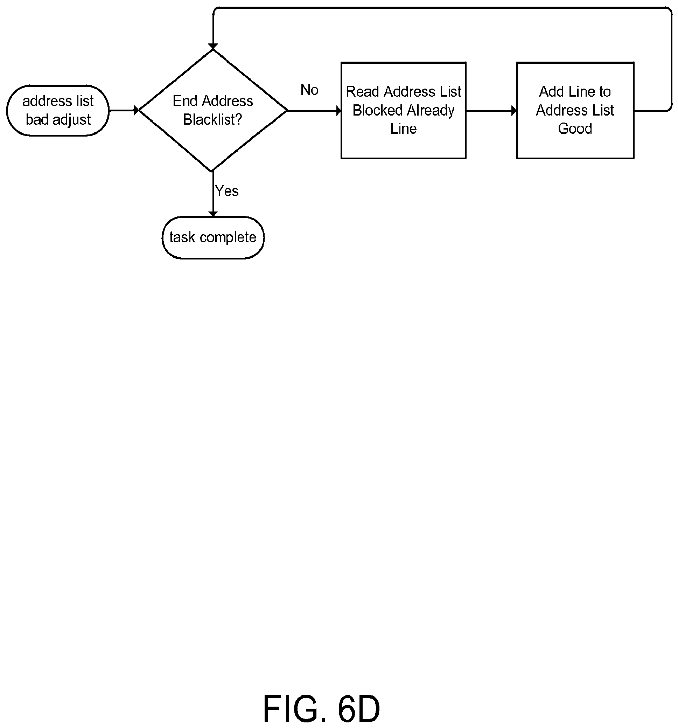

FIG. 6D is a diagram showing the steps for adjusting the Address List Bad in accordance with embodiments described herein.

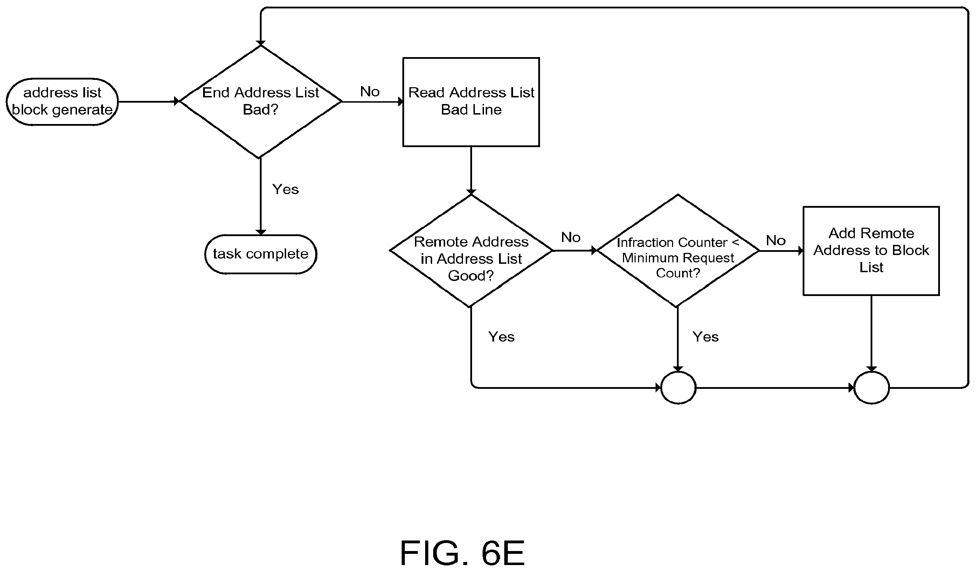

FIG. 6E is a diagram showing the steps for generating the Address List Block in accordance with embodiments described herein.

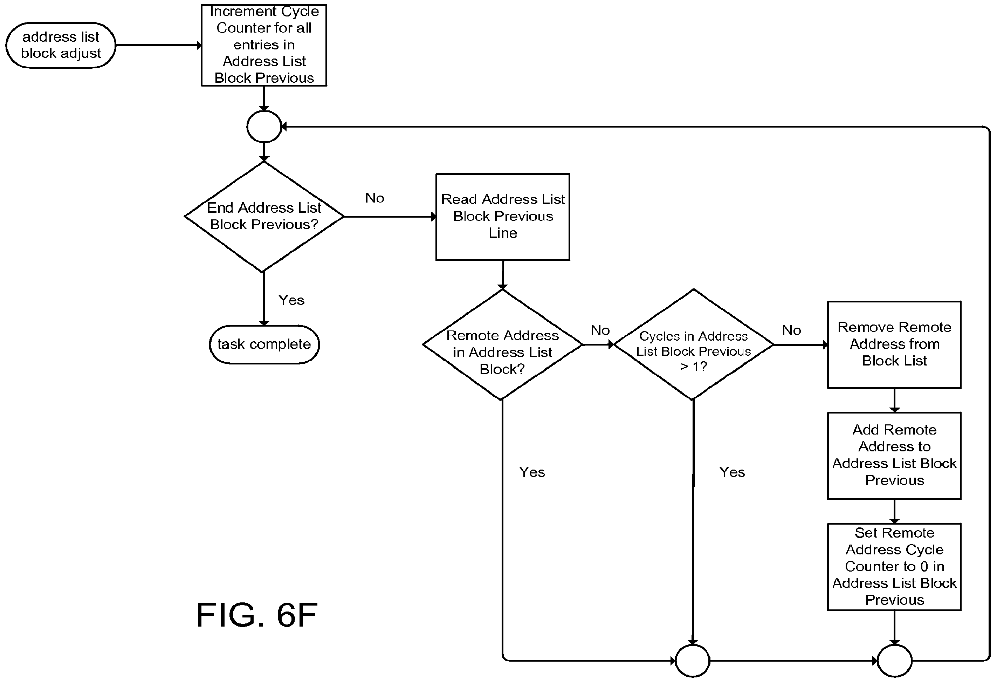

FIG. 6F is a diagram showing the steps for adjusting the Address List Block in accordance with embodiments described herein.

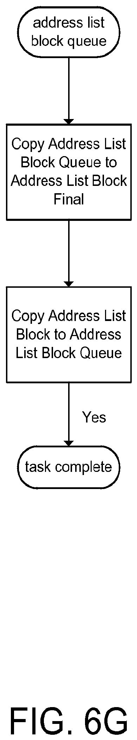

FIG. 6G is a diagram showing the steps associated with the Address List Block Queue in accordance with embodiments described herein.

### VIII. EXAMPLES OF DATA

FIG. 2 provides examples of data used throughout the system, including the sources, and how data is stored. This extracted data can be fed into the logic flow and data flow.

Web Server Log File 200 shows data typical of a web server log file, including a Remote Address requesting a website resource, a timestamp of a request, the request method and desired resource, the HTTP referrer, and the User Agent string from the web browser from where the request originated.

Request List Good 210 shows sample targets.

Request List Bad 220 shows sample targets.

Request Method Whitelist 230 shows at least one possible whitelisted HTTP method, e.g., PUT.

Address List Good 240 shows a sample IP address, and the associated counter.

Address List Bad 250 shows a sample IP address, and the associated counter.

Address Whitelist 260 shows a sample IP address.

Address Blacklist 270 shows a sample IP address.

Address List Already Blocked 280 shows a sample IP address.

Minimum Request Count 290 shows a sample counter.

Address List Block 292 shows a sample IP address.

Address List Block Previous 294 shows a sample IP address, and the associated counter.

Address List Block Queue 296 shows a sample IP address.

Address List Block Final 298 shows a sample IP address.

### IX. COMPUTER SYSTEM

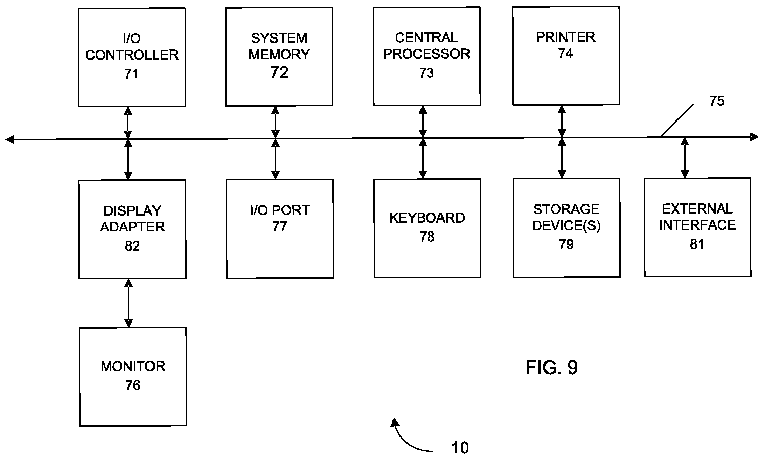

Any of the computer systems mentioned herein may utilize any suitable number of subsystems. Examples of such subsystems are shown in FIG. 9 in computer apparatus 10. In some embodiments, a computer system includes a single computer apparatus, where the subsystems can be the components of the computer apparatus. In other embodiments, a computer system can include multiple computer apparatuses, each being a subsystem, with internal components.

The subsystems shown in FIG. 9 are interconnected via a system bus 75. Additional subsystems such as a printer 74, keyboard 78, storage device(s) 79, monitor 76, which is coupled to display adapter 82, and others are shown. Peripherals and input/output (I/O) devices, which couple to I/O controller 71, can be connected to the computer system by any number of means known in the art such as input/output (I/O) port 77 (e.g., USB, FireWire^{®}). For example, I/O port 77 or external interface 81 (e.g. Ethernet, Wi-Fi, etc.) can be used to connect computer system 10 to a wide area network such as the Internet, a mouse input device, or a scanner. The interconnection via system bus 75 allows the central processor 73 to communicate with each subsystem and to control the execution of instructions from system memory 72 or the storage device(s) 79 (e.g., a fixed disk, such as a hard drive or optical disk), as well as the exchange of information between subsystems. The system memory 72 and/or the storage device(s) 79 may embody a computer readable medium. Any of the data mentioned herein can be output from one component to another component and can be output to the user.

A computer system can include a plurality of the same components or subsystems, e.g., connected together by external interface 81 or by an internal interface. In some embodiments, computer systems, subsystem, or apparatuses can communicate over a network. In such instances, one computer can be considered a client and another computer a server, where each can be part of a same computer system. A client and a server can each include multiple systems, subsystems, or components.

It should be understood that any of the embodiments of the present invention can be implemented in the form of control logic using hardware (e.g. an application specific integrated circuit or field programmable gate array) and/or using computer software with a generally programmable processor in a modular or integrated manner. As used herein, a processor includes a single-core processor, multi-core processor on a same integrated chip, or multiple processing units on a single circuit board or networked. Based on the disclosure and teachings provided herein, a person of ordinary skill in the art will know and appreciate other ways and/or methods to implement embodiments of the present invention using hardware and a combination of hardware and software.

Any of the software components or functions described in this application may be implemented as software code to be executed by a processor using any suitable computer language such as, for example, Java, C, C++, C#, Objective-C, Swift, or scripting language such as Perl or Python using, for example, conventional or object-oriented techniques. The software code may be stored as a series of instructions or commands on a computer readable medium for storage and/or transmission, suitable media include random access memory (RAM), a read only memory (ROM), a magnetic medium such as a hard-drive or a floppy disk, or an optical medium such as a compact disk (CD) or DVD (digital versatile disk), flash memory, and the like. The computer readable medium may be any combination of such storage or transmission devices.

Such programs may also be encoded and transmitted using carrier signals adapted for transmission via wired, optical, and/or wireless networks conforming to a variety of protocols, including the Internet. As such, a computer readable medium according to an embodiment of the present invention may be created using a data signal encoded with such programs. Computer readable media encoded with the program code may be packaged with a compatible device or provided separately from other devices (e.g., via Internet download). Any such computer readable medium may reside on or within a single computer product (e.g. a hard drive, a CD, or an entire computer system), and may be present on or within different computer products within a system or network. A computer system may include a monitor, printer, or other suitable display for providing any of the results mentioned herein to a user.

Any of the methods described herein may be totally or partially performed with a computer system including one or more processors, which can be configured to perform the steps. Thus, embodiments can be directed to computer systems configured to perform the steps of any of the methods described herein, potentially with different components performing a respective steps or a respective group of steps. Although presented as numbered steps, steps of methods herein can be performed at a same time or in a different order. Additionally, portions of these steps may be used with portions of other steps from other methods. Also, all or portions of a step may be optional. Additionally, any of the steps of any of the methods can be performed with modules, circuits, or other means for performing these steps.

The specific details of particular embodiments may be combined in any suitable manner without departing from the scope of embodiments of the invention as defined by the claims.

The above description of exemplary embodiments of the invention has been presented for the purposes of illustration and description. It is not intended to be exhaustive or to limit the invention to any precise form described above, and many modifications and variations are possible in light of the teaching above. The above embodiments were chosen and described in order to best explain the principles of the invention and its practical applications to thereby enable others skilled in the art to best utilize the invention in various embodiments and with various modifications as are suited to the particular use contemplated. The invention is defined by the claims.

A recitation of "a", "an" or "the" is intended to mean "one or more" unless specifically indicated to the contrary. The use of "or" is intended to mean an "inclusive or," and not an "exclusive or" unless specifically indicated to the contrary.

## Claims

1. A method comprising:
receiving (710), at a mitigation system, a plurality of requests for one or more network resources to which the mitigation system is providing a mitigation service;
identifying (720) a first request of the plurality of requests as occurring within a first observation cycle;
classifying (730) the first request as a bad request based on one or more properties of the first request;
adding a first address associated with the first request to a bad address list (250) of the first observation cycle;
obtaining a good address list (240) of the first observation cycle, the good address list defining a list of addresses that are prevented from being added to a block list, wherein the block list defines a list of addresses from which requests are blocked for a specified time;
reconciling (490) the good address list (240) of the first observation cycle with the bad address list (250) to determine the block list (292, 298), wherein the reconciling comprises determining whether one or more duplicate address exists in each of the good address list and the bad address list and removing said one or more duplicate address from the bad list to obtain the block list;
adding (140, 740) the first address associated with the first request to the block list (292, 298);
identifying (750) a second request of the plurality of requests as being transmitted from the first address and as occurring within a second observation cycle, the second request occurring within the specified time period;
classifying (760) the second request as a good request based on one or more properties of the second request; and
removing (770), based on classifying the second request as a good request, the first address from the block list (292, 298), thereby allowing a future request from the first address to be transmitted to the one or more network resources,
wherein adding a first address associated with the first request to a bad address list is based on one or more other requests in the first observation cycle that are from the first address,
wherein the plurality of requests are received as a set of web server log files, wherein each request comprises a network resource, and the requesting address, and
wherein the method further comprises:
analyzing each request from the set of web server log files and placing each requesting address into the bad address list (250) if the request is not a member of the allowed network resource list and the request is a member of the prohibited network resource list, and otherwise placing the requesting address in a good address list (240);
placing each address in the first bad address list (250) into a block list if the address is not contained in a whitelisted addresses list (260);
sending the block list to a firewall system;
incrementing (830) a counter for the first address based on the classification of the first request as a bad request;
incrementing (840) the counter for the first address for each additional request of the plurality of requests that is associated with the first address and that is classified as a bad request;
comparing (850) the counter to a threshold number; and
adding (860) the first address to the bad address list when the counter exceeds the threshold number.

2. The method of claim 1, further comprising:
transmitting the future request to the one or more network resources, wherein the future request would have been blocked in the specified time period without the removal of the first address from the block list.

3. The method of claim 1, wherein analyzing (120) the first request to determine the one or more properties of the first request.

4. The method of claim 1, wherein the one or more properties of the first request indicate a request for network resource that is on a list of prohibited network resources.

5. The method of claim 1, wherein the one or more properties of the second request indicate a request for network resource that is on a list of allowed network resources.

## Patentansprüche

1. Verfahren, umfassend:
Empfangen (710) einer Vielzahl von Anfragen an ein Schadensbegrenzungssystem für eine oder mehrere Netzwerkressourcen, für die das Schadensbegrenzungssystem einen Schadensbegrenzungsdienst bereitstellt;
Identifizieren (720) einer ersten Anfrage aus der Vielzahl von Anfragen als innerhalb eines ersten Beobachtungszyklus auftretend;
Klassifizieren (730) der ersten Anfrage als ungültige Anfrage basierend auf einer oder mehreren Eigenschaften der ersten Anfrage;
Hinzufügen einer ersten Adresse, die der ersten Anfrage zugeordnet ist, zu einer Liste ungültiger Adressen (250) des ersten Beobachtungszyklus;
Erhalten einer Liste guter Adressen (240) des ersten Beobachtungszyklus, wobei die Liste guter Adressen eine Liste von Adressen definiert, die daran gehindert werden, einer Sperrliste hinzugefügt zu werden, wobei die Sperrliste eine Liste von Adressen definiert, von denen Anfragen für eine spezifizierte Zeit gesperrt werden;
Abgleichen (490) der Liste guter Adressen (240) des ersten Beobachtungszyklus mit der Liste ungültiger Adressen (250), um die Sperrliste (292, 298) zu bestimmen, wobei das Abgleichen das Bestimmen umfasst, ob in der Liste guter Adressen und der Liste ungültiger Adressen jeweils eine oder mehrere doppelte Adressen vorhanden sind, und das Entfernen dieser einen oder mehreren doppelten Adressen aus der Liste ungültiger Adressen, um die Sperrliste zu erhalten;
Hinzufügen (140, 740) der ersten Adresse, die der ersten Anfrage zugeordnet ist, zur Sperrliste (292, 298);
Identifizieren (750) einer zweiten Anfrage aus der Vielzahl von Anfragen als von der ersten Adresse gesendet und innerhalb eines zweiten Beobachtungszyklus auftretend, wobei die zweite Anfrage innerhalb der spezifizierten Zeitspanne auftritt;
Klassifizieren (760) der zweiten Anfrage als gute Anfrage basierend auf einer oder mehreren Eigenschaften der zweiten Anfrage; und
Entfernen (770) der ersten Adresse aus der Sperrliste (292, 298), basierend auf der Klassifizierung der zweiten Anfrage als gute Anfrage, wodurch die Übertragung einer zukünftigen Anfrage von der ersten Adresse an die eine oder mehreren Netzwerkressourcen zugelassen wird,
wobei das Hinzufügen einer ersten Adresse, die der ersten Anfrage zugeordnet ist, zu einer Liste ungültiger Adressen auf einer oder mehreren anderen Anfragen im ersten Beobachtungszyklus basiert, die von der ersten Adresse stammen,
wobei die Vielzahl von Anfragen als Satz von Webserver-Protokolldateien empfangen wird, wobei jede Anfrage eine Netzwerkressource und die anfragende Adresse umfasst, und wobei das Verfahren weiter Folgendes umfasst:
Analysieren jeder Anfrage aus dem Satz von Webserver-Protokolldateien und Platzieren jeder anfragenden Adresse in der Liste ungültiger Adressen (250), wenn die Anfrage nicht auf der Liste zulässiger Netzwerkressourcen steht und die Anfrage auf der Liste verbotener Netzwerkressourcen steht, und andernfalls Platzieren der anfragenden Adresse in einer Liste gültiger Adressen (240);
Platzieren jeder Adresse in der ersten Liste ungültiger Adressen (250) in einer Sperrliste, wenn die Adresse nicht in einer Liste mit Adressen auf der Whitelist (260) enthalten ist;
Senden der Sperrliste an ein Firewall-System;
Inkrementieren (830) eines Zählers für die erste Adresse basierend auf der Klassifizierung der ersten Anfrage als ungültige Anfrage;
Inkrementieren (840) des Zählers für die erste Adresse für jede weitere Anfrage aus der Vielzahl von Anfragen, die der ersten Adresse zugeordnet ist und die als ungültige Anfrage klassifiziert wird;
Vergleichen (850) des Zählers mit einer Schwellenanzahl; und
Hinzufügen (860) der ersten Adresse zur Liste ungültiger Adressen, wenn der Zähler die Schwellenzahl überschreitet.

2. Verfahren nach Anspruch 1, weiter umfassend:
Senden der zukünftigen Anfrage an die eine oder mehreren Netzwerkressourcen, wobei die zukünftige Anfrage ohne die Entfernung der ersten Adresse aus der Sperrliste im spezifizierten Zeitraum gesperrt worden wäre.

3. Verfahren nach Anspruch 1, wobei die erste Anfrage analysiert (120) wird, um die eine oder mehreren Eigenschaften der ersten Anfrage zu bestimmen.

4. Verfahren nach Anspruch 1, wobei die eine oder mehreren Eigenschaften der ersten Anfrage eine Anfrage für eine Netzwerkressource angeben, die auf einer Liste verbotener Netzwerkressourcen steht.

5. Verfahren nach Anspruch 1, wobei die eine oder mehreren Eigenschaften der zweiten Anfrage eine Anfrage für eine Netzwerkressource angeben, die auf einer Liste zulässiger Netzwerkressourcen steht.

## Revendications

1. Procédé comprenant :
la réception (710), au niveau d'un système d'atténuation, d'une pluralité de demandes pour une ou plusieurs ressources réseau auxquelles le système d'atténuation fournit un service d'atténuation ;
l'identification (720) d'une première demande parmi la pluralité de demandes comme se produisant dans un premier cycle d'observation ;
le classement (730) de la première demande comme une mauvaise demande sur la base d'une ou plusieurs propriétés de la première demande ;
l'ajout d'une première adresse associée à la première demande à une liste d'adresses incorrectes (250) du premier cycle d'observation ;
l'obtention d'une liste d'adresses correctes (240) du premier cycle d'observation, la liste d'adresses correctes définissant une liste d'adresses qui ne peuvent pas être ajoutées à une liste de blocage, dans lequel la liste de blocage définit une liste d'adresses à partir desquelles des demandes sont bloquées pendant une durée spécifiée ;
la réconciliation (490) de la liste d'adresses correctes (240) du premier cycle d'observation avec la liste d'adresses incorrectes (250) pour déterminer la liste de blocage (292, 298), dans lequel la réconciliation comprend la détermination de l'existence d'une ou plusieurs adresses en double dans chacune des listes d'adresses correctes et des adresses incorrectes et la suppression de ladite ou desdites adresses en double de la mauvaise liste pour obtenir la liste de blocage ;
l'ajout (140, 740) de la première adresse associée à la première demande à la liste de blocage (292, 298) ;
l'identification (750) d'une seconde demande de la pluralité de demandes comme étant transmise à partir de la première adresse et comme se produisant dans un second cycle d'observation, la seconde demande se produisant dans la période spécifiée ;
le classement (760) de la seconde demande comme une demande correcte en fonction d'une ou plusieurs propriétés de la seconde demande ; et
la suppression (770), sur la base de la classification de la seconde demande comme une bonne demande, de la première adresse de la liste de blocage (292, 298), permettant ainsi à une future demande provenant de la première adresse d'être transmise à l'une ou plusieurs ressources réseau,
dans lequel l'ajout d'une première adresse associée à la première demande à une liste d'adresses incorrectes est basé sur une ou plusieurs autres demandes dans le premier cycle d'observation qui proviennent de la première adresse,
dans lequel la pluralité de demandes sont reçues sous la forme d'un ensemble de fichiers journaux de serveur Web, dans lequel chaque demande comprend une ressource réseau et l'adresse de la demande, et dans lequel le procédé comprend en outre :
l'analyse de chaque demande à partir de l'ensemble de fichiers journaux du serveur Web et le placement de chaque adresse de demande dans la liste d'adresses incorrectes (250) si la demande n'est pas membre de la liste des ressources réseau autorisées et si la demande est membre de la liste des ressources réseau interdites et sinon le placement de l'adresse de demande dans une liste d'adresses correctes (240) ;
le placement de chaque adresse de la première liste d'adresses incorrectes (250) dans une liste de blocage si l'adresse n'est pas contenue dans une liste d'adresses autorisées (260) ;
l'envoi de la liste de blocage à un système de pare-feu ;
l'incrémentation (830) d'un compteur pour la première adresse sur la base de la classification de la première demande comme une demande incorrecte ;
l'incrémentation (840) du compteur de la première adresse pour chaque demande supplémentaire de la pluralité de demandes qui est associée à la première adresse et qui est classée comme une demande incorrecte ;
la comparaison (850) du compteur à un nombre seuil ; et
l'ajout (860) de la première adresse à la liste d'adresses incorrectes lorsque le compteur dépasse le nombre seuil.

2. Procédé selon la revendication 1, comprenant en outre :
la transmission de la future demande à une ou plusieurs ressources réseau, dans lequel la future demande aurait été bloquée dans la période spécifiée sans la suppression de la première adresse de la liste de blocage.

3. Procédé selon la revendication 1, dans lequel l'analyse (120) de la première demande permet de déterminer les une ou plusieurs propriétés de la première demande.

4. Procédé selon la revendication 1, dans lequel les une ou plusieurs propriétés de la première demande indiquent une demande de ressource réseau qui figure sur une liste de ressources réseau interdites.

5. Procédé selon la revendication 1, dans lequel les une ou plusieurs propriétés de la seconde demande indiquent une demande de ressource réseau qui figure sur une liste de ressources réseau autorisées.
